# EUROPÄISCHE PATENTSCHRIFT

(11) **EP 2 926 669 B1**
(45) Veröffentlichungstag und Bekanntmachung des Hinweises auf die Patenterteilung: **24.05.2017**
(21) Anmeldenummer: 14001230.3
(22) Anmeldetag: 02.04.2014
(51) Int. Cl.: A23L 5/00, A23L 33/16, A23L 33/17, A23L 33/00, A23L 33/10, A23C 21/08, A23L 33/165, A23L 33/18, A23L 33/19

(54) **Kreatin-Proteinmatrix sowie Verfahren zur Herstellung dieser Matrix**
Creatine protein matrix and method for manufacturing the same
Matrice de protéines-créatines ainsi que procédé de fabrication de cette matrice

(43) Veröffentlichungstag der Anmeldung: 07.10.2015
(73) Patentinhaber: AlzChem AG, 83308 Trostberg (DE)
(72) Erfinder: Nieß, Barbara, 83308 Trostberg (DE); Veen, Markus, 84453 Mühldorf (DE)
(74) Vertreter: Dey, Michael

(56) Entgegenhaltungen:
- DE-A1-102007 030 495
- US-A1- 2005 008 678
- US-A1- 2006 045 906

## Beschreibung

Die vorliegende Erfindung betrifft eine pulverförmige Kreatin-Proteinmatrix zur Verwendung als Nahrungsergänzungsmittel, insbesondere für Sportler oder sportlich aktive Menschen sowie ein Verfahren zur Herstellung dieser Kreatin-Proteinmatrix.

Kreatin ist eine im Wirbeltier als auch im Menschen vorkommende körpereigene Substanz, die im Körper aus Guanidinoessigsäure, dem direkten metabolischen Vorläufer des Kreatins, gebildet wird. Kreatin spielt im Energiestoffwechsel der Zelle eine wichtige Rolle. Im Körper entsteht durch Phosphorylierung von Kreatin das Phosphokreatin, welches neben dem Adenosintriphosphat (ATP) eine wesentliche Energiereserve des Muskels darstellt. Kreatin kann sowohl endogen gebildet als auch durch die Nahrung aufgenommen werden, weshalb Kreatin seit langem als geeignetes Nahungsergänzungsmittel bekannt ist. Bei starker und über längere Zeit anhaltender Muskelarbeit sind die natürlich im Körper vorhandenen Kreatinreserven rasch erschöpft. Aus diesem Grund haben sich insbesondere bei Leistungssportlern gezielte Kreatingaben positiv auf die Leistungsfähigkeit ausgewirkt.

Neben Kreatin sind auch Proteine ein wertvoller Bestandteil von Sportlernahrung. Proteine können aus tierischen oder pflanzlichen Quellen gewonnen werden und weisen je nach Quelle, Herstellungs- und Aufarbeitungsverfahren verschiedene Eigenschaften und Funktionalitäten auf. In den letzten Jahren haben sich beispielsweise das Molkenprotein und seine veredelten Varianten als besonders vorteilhafte Ergänzung von Sportlernahrung herausgestellt.

Molkenproteine sind Bestandteil der Molke, der Fraktion der Milch, die nach Säure- oder Labfällung zurückbleibt. Neben der Fraktion der Kaseine stellt die Fraktion der Molkenproteine die zweite wichtige Eiweißfraktion der Milch von Säugetieren dar, wobei beispielsweise der Gesamtanteil von ca. 3,3 Gew.-% Eiweiß in der Kuhmilch auf ca. 2,7 Gew.-% Kaseine und 0,6 Gew.-% Molkenproteine entfallen. Die Molke kann durch verschiedene Methoden weiter aufgearbeitet werden, so dass Molkenprotein-Konzentrate, -Isolate und -Hydrolysate erhalten werden können, welche sehr nahrhaft und gut verdaulich sind.

Das Molkenprotein von Kuhmilch selbst setzt sich aus den folgenden Proteinfraktionen zusammen:

| Molkenprotein | Molkenproteinfraktion | Anteil [%] |
|---|---|---|
| Albumin | Beta-Lactoglobulin | ∼56 |
| | Alpha-Lactalbumin | ∼21 |
| | Serumalbumin | ∼7 |
| Globulin | Lactoferrin | ∼2 |
| | Immunoglobulin | ∼14 |

Diese Proteine sind insbesondere reich an verzweigten Aminosäuren und daher für die Muskelbildung relevant. Molkenproteine zählen zu den sogenannten schnellen Proteinen, d. h. die Proteine werden schnell verdaut, also im Verdauungstrakt hydrolysiert. Die Aminosäuren werden folglich auch schnell absorbiert und stehen dem Körper schnell zur Verfügung. So ist beispielsweise bei Verzehr eines Molkenprotein-Konzentrats die maximale Leucin-Konzentration im Blut bereits ca. 60 Minuten nach Proteineinnahme erreicht.

Außerdem hat sich gezeigt, dass Molkenproteine die Ausschüttung von Insulin fördern. In diesem Zusammenhang gibt es Hinweise, dass durch den hohen Anteil an verzweigten Aminosäuren (Leucin, Isoleucin, Valin) die Ausschüttung von Insulin gefördert wird.

Kreatin passiert den Verdauungstrakt ähnlich schnell wie Molkenproteine, so dass beide Komponenten ein ähnliches Verdauungsprofil aufweisen. Zudem wurde
für Kreatin gezeigt, dass sich die Aufnahme von Kreatin in den Muskel bei Vorliegen eines erhöhten Insulinspiegels verbessern lässt, so dass die Kombination von Kreatin mit einer insulinotropen Substanz die Verwertung von Kreatin verbessert.

Herkömmliche Molkenprotein-Konzentrate, -Isolate und -Hydrolysate enthalten Laktose (bis zu 5 %), was für Personen mit einer Laktoseintoleranz äußerst problematisch ist. Als laktosefreie Alternative wird oft Sojaprotein angeboten, das jedoch geschmacklich und bezüglich der Verdaulichkeit weniger vorteilhaft ist.

Milch enthält natürlicherweise bereits Kreatin, jedoch sind die Gehalte sehr gering. Sie liegen i. d. R. zwischen 50 und 100 mg/kg, also maximal bei 0,01 Gew.-%. Ein aus dieser Milch hergestelltes Molkenprotein-Konzentrat, - Isolat oder -Hydrolysat besitzt ebenfalls noch einen natürlichen Kreatingehalt, der bei maximal 0,015 Gew.-% in Trockenmasse liegt.

Kreatin und Molkenproteine, insbesondere Molkenprotein-Konzentrate und -Isolate sind aufgrund der genannten Eigenschaften beliebte Nahrungsergänzungsmittel für Sportler. Sie werden oft einzeln in Pulverform angeboten. Darüber hinaus sind eine Reihe von Produkten bekannt, die Kreatin und Molkenproteine neben teilweise zahlreichen weiteren Stoffen als Bestandteil komplexer physikalischer Mischungen, sogenannten Blends, umfassen. Bei genaueren Untersuchungen dieser Produkte musste festgestellt werden, dass diese Blends zur Entmischung neigen. Dies kann bereits bei der Herstellung einer Mischung, aber auch beim Abfüllen oder Transport dieser Mischung geschehen. Insbesondere neigen Blends zur Entmischung, die aus Mischungen unterschiedlich großer Teilchen bestehen, d. h. eine homogene Verteilung der Bestandteile in der Mischung ist auf Dauer nicht gewährleistet.

Zudem hat sich gezeigt, dass sich Kreatin als solches aber auch in diesen Mischungen (Blends) bei Zugabe von Wasser nur langsam auflöst. So kann beispielsweise beobachtet werden, dass sich bei Zugabe einer physikalischen Mischung von Kreatin und Molkenprotein zu Wasser ein Bodensatz bildet, der überwiegend aus Kreatin besteht. Auch in dem Fall, dass der Verbraucher sich eigenhändig eine Mischung dieser beiden Komponenten herstellt, lässt sich diese Eigenschaft beobachten. Dies ist auch dann von Nachteil, wenn Kreatin als Bestandteil eines DBB-Pulvermixes (dry blend beverage) verwendet wird. In beiden Fällen empfindet der Verbraucher beim Verzehr aufgrund der enthaltenen Kreatin-Kristalle ein unangenehm sandiges Gefühl im Mund. Auch muss bei Verwendung einer derartigen Mischung das Produkt immer wieder gut aufgeschlämmt werden, um eine vollständige Einnahme der Bestandteile zu gewährleisten. Üblicherweise wird Kreatin hierbei in Form seines Monohydrats verwendet, das kristallin ist und eine mittlere Teilchengröße von ca. 100 bis 150 µm aufweist.

Neben den hier beschriebenen und auf dem Markt erhältlichen Produkten sind auch zahlreiche Zusammensetzungen in der Patent- und Fachliteratur beschrieben, die Kreatin und Proteine umfassen. Beispielhaft sind hier die Patentdokumente DE 102005050879 A1, US 5,726,146 A, US 6,521,591 B1, US 2006,0198899 A1, US 20030215506 A1, US 20060062827 A1, US 20010008641 A1 oder US 20010041187 A1 oder US 2006/045906 A1 zu nennen. Gemeinsam ist diesen Anmeldungen, dass ausschließlich Blends oder andere physikalische Mischungen beschrieben werden, die in wässriger oder gelartiger Form vorliegen oder die aufgrund ihrer Formulierung zur Entmischung neigen.

Des Weiteren wird mit dem US-Patent 2,919,195 ein saures Fruchtsaftgetränk beschrieben, das mit Proteinen und weiteren Inhaltsstoffen angereichert ist. Als Quelle für die Proteine werden Magermilchpulver, das 35 Gew.-% Protein, davon der überwiegende Teil Casein, enthält, oder Molkenpulver mit 10 Gew.-% Protein (überwiegend Laktalbumin) oder auch andere Milchproteine verwendet, die in getrockneter Form vorliegen. Dem Fruchtsaftgetränk kann auch Kreatin zugesetzt sein. Zudem wird ein Verfahren beschrieben, mit welchem der Fruchtsaft hergestellt wird. Casein hat den Nachteil, dass es zu den sogenannten langsamen Proteinen zählt, aus denen die Aminosäuren während der Verdauung nur langsam freigesetzt werden. Außerdem enthalten die hier eingesetzten Proteinquellen einen vergleichsweise geringen Proteinanteil, stattdessen aber in deutlichem Umfang weitere typische Bestandteile von Milchpulvern wie z. B. Kohlenhydrate, insbesondere Laktose.

Zudem wird mit dem finnischen Patent FI 103089 B ein Nahrungsmittel beschrieben, das Colostrum-Molke, Kreatin und Carnitin umfasst und in Form von gefriergetrockneten Flakes vorliegt. Die Gefriertrocknung birgt den Nachteil, dass sie sehr teuer und u. U. sehr zeitaufwändig ist. Zudem ist die technische Umsetzung des in FI 103089B beschriebenen Verfahrens sehr anspruchsvoll, da die technischen Apparate aufgrund des notwendigen Vakuums von 0,1 mbar hohen Anforderungen genügen müssen. Colostrum-Molke kann nur aus einer kleinen Fraktion der Milch gewonnen werden, nämlich aus der Milch, die innerhalb der ersten 10 Stunden nach dem Kalben gewonnen wird. Diese Molkefraktion enthält recht hohe Mengen an Immunoglobulinen und Wachstumsfaktoren, so dass aus diesem Grund die äußerst schonende Gefriertrocknung zur Anwendung kommt. Vor diesem Hintergrund muss Colostrum-Molke als ein Spezialprodukt betrachtet werden, an dessen Herstellung besondere Anforderungen zu stellen sind. Zudem besteht die beschriebene Colostrum-Molke nur zu 20 Gew.-% aus Protein, dafür sind jedoch etwa 50 Gew.-% Kohlenhydrate enthalten. Damit ist Colostrum-Molke ein zum einen sehr teures Spezialprodukt und zum anderen nicht als ein Protein-reiches und gleichzeitig Kohlenhydrat-armes Nahrungsergänzungsmittel für Sportler geeignet.

Ausgehend von diesem Stand der Technik liegt der vorliegenden Erfindung, die Aufgabe zugrunde, die beschriebenen Nachteile des Standes der Technik zu überwinden. Darüber hinaus soll ein Produkt bereitgestellt werden, dass sowohl Kreatin oder eines seiner Salze vordosiert enthält, eine stabile Form für Kreatin und oder eines seiner Salze bereitstellt als auch eine gute (Weiter-)Verarbeitbarkeit gewährleistet. Weiterhin soll ein Produkt, insbesondere ein Nahrungsergänzungsmittel bereitgestellt werden, das anwendungssicher hinsichtlich der Dosierung seiner Inhaltsstoffe ist, das eine bequeme Darreichungsform aufweist, das ein gutes Handling ermöglicht und/oder das Unverträglichkeiten hinsichtlich eventueller Nebenbestandteile minimiert. Zudem liegt der vorliegenden Erfindung die Aufgabe zugrunde ein Verfahren zur Herstellung dieses Produktes als auch der Darreichungsform bereitzustellen.

Diese Aufgaben werden gelöst durch ein Kreatin-Proteinmatrix gemäß Anspruch 1 sowie ein Verfahren zur Herstellung einer Kreatin-Proteinmatrix gemäß Anspruch 12.

Damit ist gemäß einer ersten Ausführung eine Kreatin-Proteinmatrix Gegenstand der vorliegenden Erfindung, die
i) mindestens eine Protein-Komponente ausgewählt aus der Gruppe der Molkenprotein-Konzentrate, Molkenprotein-Isolate, Molkenprotein-Hydrolysate oder Mischungen hiervon mit einem Proteingehalt in Trockenmasse von mind. 55 Gew.-%, und
ii) mindestens eine Kreatin-Komponente ausgewählt aus der Gruppe Kreatin oder ein Salz hiervon, Kreatin-Monohydrat oder Mischungen hiervon,
umfasst, wobei die Kreatin-Proteinmatrix als Pulver, insbesondere als Pulver mit einer mittleren Teilchengröße von 10 bis 250 µm, vorliegt und mindestens 50 % des Pulvers Teilchen enthält, von denen jedes einzelne Teilchen sowohl die Protein-Komponente als auch die Kreatin-Komponente umfasst, wobei weiterhin bevorzugt die Kreatin-Komponente dispergiert in der Protein-Komponente vorliegt.

Besonders bevorzugt enthält das Pulver mindestens 60 %, weiterhin bevorzugt mindestens 70 %, weiterhin bevorzugt mindestens 80 %, weiterhin bevorzugt mindestens 90 %, weiterhin bevorzugt mindestens 95 %, weiterhin bevorzugt mindestens 98 % Teilchen, von denen jedes einzelne Teilchen sowohl die Kreatin-Komponente als auch die Protein-Komponente umfasst, wobei weiterhin bevorzugt die Kreatin-Komponente dispergiert in der Protein-Komponente vorliegt.

Ganz besonders bevorzugt ist dabei vorgesehen, dass die Kreatin-Proteinmatrix als Pulver, insbesondere als Pulver mit einer mittlere Teilchengröße von 10 bis 250 µm, vorliegt und jedes Teilchen des Pulvers die Protein-Komponente und die Kreatin-Komponente umfasst, wobei die Kreatin-Komponente dispergiert in der Protein-Komponente vorliegt.

Gemäß einer zweiten Ausführung der vorliegenden Erfindung umfasst die Kreatin-Proteinmatrix neben der Kreatin-Komponente und der Protein-Komponente bevorzugt zusätzlich iii) mindestens eine Mineralstoff-Komponente, die vorzugsweise aus der Gruppe der Alkali- und Erdalkaliverbindungen gewählt wird. Besonders bevorzugt kann diese Mineralstoff-Komponente aus der Gruppe der Alkali- und Erdalkaliverbindungen in Form ihrer Salze zugesetzt werden, wobei Alkali- oder Erdalkalisalze der Phosphorsäure, Diphosphorsäure, Triphosphorsäure, Zitronensäure, Milchsäure, Gluconsäure, Doppelsalze oder Mischungen weiterhin bevorzugt sind. Somit ist auch eine Kreatin-Proteinmatrix Gegenstand der Erfindung, die weiterhin
iii) mindestens eine Mineralstoff-Komponente ausgewählt aus der Gruppe der Alkalioder Erdalkalisalze der Phosphorsäure, Diphosphorsäure, Triphosphorsäure, Zitronensäure, Milchsäure, Gluconsäure, Doppelsalze oder Mischungen hiervon, umfasst.

Hierbei ist weiterhin bevorzugt vorgesehen, dass die Kreatin-Proteinmatrix als Pulver, vorzugsweise als Pulver mit Teilchengröße von 10 bis 250 µm vorliegt und mindestens 50 % des Pulvers Teilchen enthält, von denen jedes einzelne Teilchen sowohl mindestens eine Protein-Komponente ausgewählt aus der Gruppe der Molkenprotein-Konzentrate, Molkenprotein-Isolate, Molkenprotein-Hydrolysate oder Mischungen hiervon mit einem Proteingehalt in Trockenmasse von mind. 55 Gew.-%, als auch mindestens eine Kreatin-Komponente ausgewählt aus der Gruppe Kreatin oder ein Salz hiervon, Kreatin-Monohydrat oder Mischungen hiervon, als auch mindestens eine Mineralstoff-Komponente ausgewählt aus der Gruppe der Alkali- oder Erdalkalisalze der Phosphorsäure, Diphosphorsäure, Triphosphorsäure, Zitronensäure, Milchsäure, Gluconsäure, Doppelsalze oder Mischungen hiervon, umfasst.

Ganz besonders bevorzugt ist vorgesehen, dass die Kreatin-Proteinmatrix als Pulver, vorzugsweise als Pulver mit einer mittleren Teilchengröße von 10 bis 250 µm, vorliegt und jedes Teilchen des Pulvers die Protein-Komponente, die Kreatin-Komponente und die Mineralstoffkomponente umfasst.

Besonders bevorzugt enthält das Pulver mindestens 50 %, weiterhin bevorzugt mindestens 60 %, weiterhin bevorzugt mindestens 70 %, weiterhin bevorzugt mindestens 80 %, weiterhin bevorzugt mindestens 90 % besonders bevorzugt mindestens 95 % und ganz besonders bevorzugt mindestens 98 % an Teilchen, von denen jedes einzelne Teilchen sowohl die Kreatin-Komponente als auch die Protein-Komponente als auch die Mineralstoff-Komponente umfasst, wobei weiterhin bevorzugt die Kreatin-Komponente als auch die Mineralstoff-Komponente in der Protein-Komponente dispergiert vorliegen.

Ganz besonders bevorzugt ist vorgesehen, dass die Kreatin-Proteinmatrix als Pulver mit einer mittleren Teilchengröße von 10 bis 250 µm vorliegt und jedes Teilchen des Pulvers die Protein-Komponente, die Kreatin-Komponente und die Mineralstoffkomponente umfasst und die Kreatin-Komponente, insbesondere sowohl die Kreatin-Komponente als auch die Mineralstoff-Komponente, dispergiert in der Protein-Komponente vorliegt.

Die mittlere Teilchengröße gemäß der vorliegenden Erfindung wird hierbei gemäß den Beispielen als x50-Wert bestimmt.

Dabei soll unter einer Kreatin-Proteinmatrix gemäß der vorliegenden Erfindung immer eine innige Mischung von Kreatin-Komponente mit der Protein-Komponente und optional der Mineralstoff-Komponente verstanden sein, deren Komponenten derart co-prozessiert sind, dass diese Komponenten nicht durch einfache Trennmethoden wie beispielsweise Sieben oder Sichten voneinander trennbar sind. Die Protein-Komponente bildet dabei die eigentliche Matrix, in der die Kreatin-Komponente und optional die Mineralstoff-Komponente dispergiert vorliegen. Die Dispergierung wird gemäß der vorliegenden Erfindung dadurch erreicht, dass alle zugesetzten Zutaten im Eintopfverfahren in Wasser aufgelöst bzw. überwiegend aufgelöst werden und somit co-prozessiert werden. Dabei wird sichergestellt, dass ein einphasiges System mit allenfalls geringem Feststoffanteil erhalten wird, in dem im Fall eines Feststoffanteils durch kräftiges Rühren keinerlei Sedimentation eintritt. Zur Entfernung des Wasseranteils sind geeignete Trocknungsmethoden anzuwenden, insbesondere die Sprühtrocknung, Dünnschichttrocknung oder Walzentrocknung. Dabei wird der homogene Zustand der Lösung bzw. der Aufschlämmung im trockenen Produkt konserviert. Die Bestandteile werden dabei nicht voneinander separiert. Damit unterscheidet sich eine Kreatin-Proteinmatrix der vorliegenden Erfindung von einem Gemenge oder einem Blend der Einzelkomponenten, in dem diese Komponenten nebeneinander und somit trennbar (beispielsweise durch Sieben oder Sichten) voneinander vorliegen. Die Kreatin-Proteinmatrix liegt dabei als Pulver vor und jedes Teilchen des Pulvers umfasst die Protein-Komponente und die Kreatin-Komponente, wobei die Kreatin-Komponente dispergiert in der Protein-Komponente vorliegt. Dieses Vorgehen ist auch von einem Verfahren zu unterscheiden, bei dem zwei oder mehr Komponenten aus zwei oder mehr unterschiedlichen Behältern in außerdem möglicherweise noch unterschiedlichen Aggregatzuständen, während eines Trocknungsprozesses beispielsweise schichtweise aufeinander aufgebracht werden und/oder gezielt agglomeriert werden.

Somit kann gemäß der vorliegenden Erfindung ein sensorisch ansprechendes, äußerst homogenes Mehr-Komponenten-Produkt bereitgestellt werden. Das Produkt ist lagerstabil und lässt sich hervorragend verarbeiten, wobei Mischprozeduren wie beispielsweise zur Herstellung von Blends, entfallen. Auch kleine Mengen der Kreatin-Komponente oder Mineralstoff-Komponente können auf diesem Weg äußerst homogen eingebracht werden. Insbesondere für die Kreatin-Komponente war nicht zu erwarten, dass sich diese in dem vorliegenden Prozess derart vorteilhaft und ohne zusätzlichen Arbeitsaufwand verarbeiten lässt, da Kreatin normalerweise unter Temperaturbelastung instabil und zudem von begrenzter Löslichkeit ist. Die Kreatin-Komponente liegt nach dem Prozess fein und homogen verteilt, somit im Protein dispergiert, vor. Dabei hat sich überraschend gezeigt, dass die Kreatin-Komponente nicht länger kristallin ist, sondern in den amorphen Zustand übergegangen ist. So stellt das Produkt eine optimale Darreichungsform für Kreatin dar.

Gemäß einer weiteren vorteilhaften Ausführung ist somit auch eine Kreatin-Proteinmatrix Gegenstand der vorliegenden Erfindung, die
i) mindestens eine Protein-Komponente ausgewählt aus der Gruppe der Molkenprotein-Konzentrate, Molkenprotein-Isolate, Molkenprotein-Hydrolysate oder Mischungen hiervon,
ii) mindestens eine Kreatin-Komponente ausgewählt aus der Gruppe Kreatin oder ein Salz hiervon, Kreatin-Monohydrat oder Mischungen hiervon, und optional
iii) mindestens eine Mineralstoff-Komponente ausgewählt aus der Gruppe der Alkali- oder Erdalkalisalze der Phosphorsäure, Diphosphorsäure, Triphosphorsäure, Zitronensäure, Milchsäure, Gluconsäure, Doppelsalze oder Mischungen hiervon,
umfasst, wobei die Kreatin-Proteinmatrix als Pulver, insbesondere als Pulver mit einer mittleren Teilchengröße von 10 bis 250 µm, vorliegt, und die Teilchen des Pulvers die Kreatin-Komponente in amorpher Form umfassen.

Besonders bevorzugt liegt die Kreatin-Proteinmatrix hierbei als Pulver, insbesondere als Pulver mit einer mittleren Teilchengröße von 10 bis 250 µm, vor, wobei das Pulver mindestens 50 %, weiterhin bevorzugt mindestens 60 %, weiterhin bevorzugt mindestens 70 %, weiterhin bevorzugt mindestens 80 %, weiterhin bevorzugt mindestens 90 % besonders bevorzugt mindestens 95 % und ganz besonders bevorzugt mindestens 98 % Teilchen enthält, von denen jedes einzelne Teilchen sowohl die Kreatin-Komponente, insbesondere sowohl die Kreatin-Komponente als auch die Mineralstoff-Komponente, umfasst, wobei weiterhin bevorzugt die Kreatin-Komponente, insbesondere sowohl die Kreatin-Komponente als auch die Mineralstoff-Komponente, dispergiert in der Protein-Komponente vorliegen und die Teilchen des Pulvers die Kreatin-Komponente in amorpher Form umfassen.

Besonders bevorzugt liegt die Kreatin-Proteinmatrix als Pulver, insbesondere als Pulver mit einer mittleren Teilchengröße von 10 bis 250 µm, vor, wobei jedes Teilchen des Pulvers die Protein-Komponente und die Kreatin-Komponente, insbesondere die Protein-Komponente, die Kreatin-Komponente und die Mineralstoff-Komponente, umfasst, wobei die Teilchen die Kreatin-Komponente in amorpher Form umfassen.

Somit kann ein Produkt bereitgestellt werden, in dem die Kreatin-Komponente in einer darreichungs- und anwendungsfreundlichen sowie anwendungssicheren Form vorliegt. Weiterhin überraschend hat sich gezeigt, dass diese Kreatin-Proteinmatrix ein besonders gutes Rehydrierungs- und Lösungsverhalten aufweist.

Gemäß einer weiteren Ausführungsform ist insbesondere eine Kreatin-Proteinmatrix Gegenstand der vorliegenden Erfindung, die

| | | |
|---|---|---|
| i) | 50 bis 95 Gew.-% | Protein-Komponente, |
| ii) | 5 bis 40 Gew.-% | Kreatin-Komponente und optional |
| iii) | 0 bis 10 Gew.-% | Mineralstoff-Komponente, |
| | wobei die Matrix | |
| iv) | höchstens 10 Gew.-% | Wasser |

umfasst oder insbesondere enthält.

So kann der Verbraucher mit dem Verzehr von 10 g dieses Produkts sehr bequem bis zu 4 g an Kreatin-Komponente aufnehmen. Gerne nehmen Sportler derartige Produkte in mehreren Portionen über den Tag verteilt zu sich. Enthält das Produkt beispielsweise 10 % an Kreatin-Komponente, kann beim Verzehr von dreimal 10 g auf einfache Weise 3 g Kreatin verzehrt werden, was der derzeitigen Verzehrempfehlung für Kreatin in Europa entspricht. Gleichermaßen kann durch ein Produkt, das 16 % einer Kreatin-Komponente enthält, bei Einnahme von 3 x 10 g der Kreatin-Proteinmatrix knapp 5 g Kreatin eingenommen werden, was der derzeitigen Empfehlung in USA entspricht. Enthält das Produkt außerdem noch 1,5 % Mineralstoffkomponente, wie beispielsweise Ca₃(PO₄)₂, werden zusätzlich noch etwa 100 mg Calcium eingenommen, was 10 % der empfohlenen täglichen Zufuhr entspricht. Besonders wirkungsvoll hat sich die Einnahme von Kreatin- und auch Proteinprodukten direkt vor oder direkt nach dem Sport gezeigt. Aber auch vor dem Schlafengehen hat sich die Einnahme als vorteilhaft erwiesen. Mit einer Dosis der Kreatin-Proteinmatrix (10 g) können bis zu 170 kJ eingenommen werden, andererseits kann der Brennwert aber auch auf nur knapp 80 kJ/Portion reduziert werden. Als Portionsgröße wurden dabei 10 g angenommen. Dabei ist offensichtlich, dass es sich nicht um eine Ersatznahrung oder ein Alleinnahrungsmittel handelt, sondern als Nahrungsergänzungsmittel in Situationen erhöhten Energiebedarfs wie beispielsweise im Sport zu sehen ist.

Durch Einhaltung dieser Konzentrationsbereiche kann ein Produkt bereitgestellt werden, dass eine Kreatin-Komponente in einem besonders vorteilhaften Mischungsverhältnis mit der Protein-Komponente und optional der Mineralstoffkomponente umfasst. Insbesondere kann auch vorgesehen sein, dass die Kreatin-Proteinmatrix diese Komponenten enthält. Hinzuweisen ist in diesem Zusammenhang jedoch darauf, dass die Protein-Komponente der vorliegenden Erfindung ein Naturprodukt ist und von sich aus neben dem Protein an sich weitere Stoffe enthalten kann. In diesem Zusammenhang soll insbesondere auf eventuell enthaltende Fette, Mineralstoffe und Kohlenhydrate hingewiesen werden. So darf die gewählte Proteinkomponente maximal 25 % Kohlenhydrate und maximal 8 % Fett, insbesondere maximal 15 % Kohlenhydrate und maximal 6 % Fett enthalten. Besonders bevorzugt sind Proteinrohstoffe, die weniger als 5 % Kohlenhydrate und weniger als 4 % Fett enthalten. Der Mineralstoffgehalt (bestimmt als Asche) sollte nicht mehr als 8 % betragen, insbesondere nicht mehr als 6 %. Besonders bevorzugt sind Proteinrohstoffe mit einem Mineralstoffgehalt von maximal 5 %. Somit enthält eine besonders bevorzugte erfindungsgemäße Kreatin-Proteinmatrix neben den gelisteten Komponenten immer weitere Inhaltstoffe in natürlicherweise veränderlichen Anteilen, die durch die Protein-Komponente eingebracht werden. Somit soll gemäß der vorliegenden Erfindung unter einer Kreatin-Proteinmatrix, die die Komponenten i) bis iv) enthält, eine Matrix verstanden werden, zu deren Herstellung neben den genannten Komponenten keine weiteren Stoff, wie Kohlenhydrate, Vitamine oder andere Inhaltsstoffe verwendet werden, der zusätzlich eingebracht werden müssten.

Gleichzeitig oder unabhängig hiervon umfasst oder enthält eine erfindungsgemäße Kreatin-Proteinmatrix höchstens 10 Gew.-% Wasser, insbesondere höchstens 7 Gew.-% Wasser, weiterhin bevorzugt höchstens 5 Gew.-% Wasser, ganz besonders bevorzugt höchstens 3 Gew.-% Wasser. Hierdurch kann eine besonders lagerstabile Kreatin-Proteinmatrix bereitgestellt werden, die insbesondere stabil in mikrobiologischer Hinsicht als auch stabil hinsichtlich Abbaureaktionen von Kreatin ist.

Weiterhin bevorzugt kann vorgesehen sein, dass die Kreatin-Proteinmatrix insbesondere mindestens 50 Gew.-% Protein-Komponente, bevorzugt mindestens 60 Gew.-%, besonders bevorzugt mindestens 70 Gew.-% und ganz besonders bevorzugt mindestens 80 Gew.-% Protein-Komponente umfasst oder enthält. Dabei kann auch vorgesehen sein, dass der Anteil der Protein-Komponente höchstens 95 Gew.-% beträgt. Die Gehaltmengen an Protein-Komponente beziehen sich im Umfang der vorliegenden Erfindung im Fall der Konzentrate, Hydrolysate oder Isolate immer auf das Protein und eventuell weitere natürliche Inhaltsstoffe wie z. B. Kohlenhydrate, Fett, Spurenelemente und Vitamine, die in den Naturprodukten enthalten sind. Gleichzeitig oder unabhängig hiervon kann die erfindungsgemäße Kreatin-Proteinmatrix insbesondere mindestens 5,0 Gew.-% Kreatin-Komponente, bevorzugt mindestens 8,0 Gew.-%, besonders bevorzugt mindestens 10,0 Gew.-% umfassen oder enthalten. Dabei kann auch vorgesehen sein, dass der Anteil der Kreatin-Komponente höchstens 40 Gew.-%, insbesondere höchstens 30 Gew.-%, beträgt.

Gemäß einer Weiterführung der Erfindung kann auch vorgesehen sein, dass eine erfindungsgemäße Kreatin-Proteinmatrix höchstens 10 Gew.-% Fette, insbesondere höchstens 8 Gew.-% Fette, und/oder höchstens 10 Gew.-% Wasser umfasst oder enthält. Bezüglich der weiteren Komponenten Fette und Wasser hat sich im Rahmen von Untersuchungen gezeigt, dass somit eine Kreatin-Proteinmatrix bereitgestellt werden kann, die besonders gut zu dosieren ist. Besonders überraschend hat sich herausgestellt, dass die Rieselfähigkeit und das Fließverhalten einer solchen Kreatin-Proteinmatrix besonders gut sind.

Im Rahmen der vorliegenden Erfindung können als Kreatin-Komponente Kreatin, KreatinMonohydrat oder Kreatinsalze und Mischungen hiervon eingesetzt werden. Bevorzugt zu verwendenden Kreatin-Komponenten sind insbesondere Kreatin, KreatinMonohydrat und Kreatinsalze ausgewählt aus der Gruppe Kreatinascorbat, Kreatindihydroascorbat, Kreatincitrat, Kreatin-Citronensäure-Verbindungen im molaren Verhältnis 1 : 1 bis 3 : 1, Kreatin-alphaketoglutarat, Kreatinpyruvat, Kreatinphosphat, Kreatinacetat, Kreatinmaleat, Kreatinmalat, Kreatinfumarat, Kreatingluconat, Kreatinformiat, Kreatinaspartat, Kreatinphosphoenolpyruvat, Kreatinfolat, Kreatindihydrolipoat oder Kreatinlipoat oder beliebige Mischungen hiervon. Selbstverständlich können auch alle anderen geeigneten und physiologisch verträglichen Kreatin-Derivate dem Erfindungsgedanken folgend wie beispielsweise Dikreatin, Kreatinester, Phosphokreatin, Kreatinethylester eingesetzt werden. Besonders bevorzugt ist Kreatin-Monohydrat.

Als Protein-Komponente wird gemäß der vorliegenden Erfindung mindestens eine Protein-Komponente ausgewählt aus der Gruppe der Molkenprotein-Konzentrate, Molkenprotein-Isolate, Molkenprotein-Hydrolysate oder Mischungen hiervon eingesetzt. Die Proteinkomponenten zeichnen sich dadurch aus, dass sie durch etablierte Methoden aus der Molke von insbesondere Kuhmilch, Ziegenmilch oder Schafsmilch, gewonnen werden können und ein sehr nahrhaftes und gut verdauliches Protein liefern. Der Proteinanteil dieser Fraktion ist insbesondere reich an verzweigten Aminosäuren und daher für den Muskelbildung relevant.

Zur Herstellung von Molkenprotein-Konzentraten, -Isolaten und -Hydrolysaten wird die nach Lab- oder Säurefällung erhaltene Molke mit Hilfe von Membranfiltrationsmethoden, Elektrodialyse, Ionenaustauscherchromatographie, Teilhydrolyse oder Kristallisationsvorgängen so behandelt, dass die gewünschten Fraktionen bzw. Produkte erhalten werden.

Süß- und Sauermolkepulver aus Kuhmilch gemäß der vorliegenden Erfindung haben die folgenden typischen Zusammensetzungen (bezogen auf die Trockenmasse):

| | Laktose [Gew.-%] | Protein [Gew.-%] | Fett [Gew.-%] | Asche [Gew.-%] | Wasser [Gew.-%] |
|---|---|---|---|---|---|
| Süßmolke | ≥70 | ≥12 | ≤1,5 | ≤ 8,5 | ≤ 3,5 |
| Sauermolke | ≥65 | 9 ± 1 | - | 11 ± 1 | ≤ 3,5 |

Durch geeignete Methoden kann der Proteinanteil in der Molke erhöht werden. So können beispielsweise Molkenprotein-Konzentrate erhalten werden, die unterschiedlich hohe Eiweißgehalte haben. Das für Sportlernahrung üblicherweise eingesetzte Konzentrat hat einen Proteingehalt von mindestens 55 Gew.-% bis ca. 80 Gew.-% (bezogen auf die Trockenmasse des Molkenprotein-Konzentrats - WPC-60 oder WPC-80). Die Anreicherung der Proteinfraktion erfolgt durch Ultrafiltration, optional kombiniert mit einer Diafiltration. Ein Solches, durch Ultrafiltration hergestelltes, Retentat, hat in der Trockensubstanz beispielsweise die folgende Zusammensetzung, wobei die Gehalte selbstverständlich in gewissen Bereichen schwanken können:

| | Protein [Gew.-%] | Laktose [Gew.-%] | Fett [Gew.-%] | Asche [Gew.-%] | Wasser [Gew.-%] |
|---|---|---|---|---|---|
| WPC-60 | 59 - 63 | 0,0 - 22,0 | 2,5 - 5,0 | 3,0 - 5,0 | 3,0 - 6,0 |
| WPC-80 | 78 - 82 | 0,0 - 4,5 | 3,5 - 7,0 | 3,0 - 5,0 | 3,0 - 5,0 |

Das Retentat ist dabei im Gegensatz zum Permeat der Anteil, der bei der Membranfiltration durch die Membran zurückgehalten wird. Durch Trocknen des Retentats wird nach diesem Verfahren schließlich das Molkenprotein-Konzentrat erhalten.

Zur Gewinnung von Molkenprotein-Isolaten (WPI) muss ein weiterer Arbeitsschritt bei der Aufarbeitung der Molke eingefügt werden. Die Molke wird vor der Ultrafiltration zunächst einer Mikrofiltration beispielsweise zur Entfernung des Fetts unterzogen werden. Eine andere Möglichkeit ist ein zusätzlicher Chromatographieschritt. Es werden schließlich Proteinpulver gewonnen, die >90 % Protein (in Trockenmasse) enthalten.

Eine typische Zusammensetzung gemäß der vorliegenden Erfindung ist der folgenden Tabelle zu entnehmen.

| | Protein [Gew.-%] | Laktose [Gew.-%] | Fett [Gew.-%] | Asche [Gew.-%] | Wasser [Gew.-%] |
|---|---|---|---|---|---|
| WPI | 90 - 96 | 0,0 - 3,0 | 0,4 - 1,0 | 1,5 - 2,5 | 3,0 - 5,0 |

Werden die nach Membranfiltration erhaltenen Retentate einer Hydrolyse/Proteolyse unterworfen, können geeignete Molkenprotein-Hydrolysate (WPH) erhalten werden.

Molkenprotein-Hydrolysate werden durch enzymatische Hydrolyse der Molkenprotein-Isolate oder -Konzentrate hergestellt. Durch die Hydrolyse oder Proteolyse wird das natürliche Protein in kleinere Fragmente gespalten. Dadurch verändert sich das natürliche Protein zum einen geschmacklich, zum anderen verbessert sich die Verdaulichkeit. Außerdem verringert sich das allergene Potential.

Die Zusammensetzung kann gemäß der vorliegenden Erfindung wie folgt sein:

| | Protein [Gew.-%] | Laktose [Gew.-%] | Fett [Gew.-%] | Asche [Gew.-%] | Wasser [Gew.-%] |
|---|---|---|---|---|---|
| WPH | 76 - 82 | 0,0 - 4,0 | 3,0 - 5,5 | 3,5 - 5,0 | 3,0 - 5,0 |

Somit umfasst eine Kreatin-Proteinmatrix gemäß der vorliegenden Erfindung eine Protein-Komponente ausgewählt aus der Gruppe Molkenprotein-Konzentrat, Molkenprotein-Hydrolysat oder Molkenprotein-Isolat, die ihrerseits einen Proteingehalt von mindestens 55 Gew.-% Protein in Trockenmasse aufweist. Besonders bevorzugt umfasst oder enthält eine Kreatin-Proteinmatrix als Protein-Komponente ein Molkenprotein-Konzentrat mit einem Protein-Gehalt in Trockenmasse von mindestens 75 Gew.-%. In einer weiteren Ausführungsform findet zur Herstellung der Kreatin-Proteinmatrix ein Molkenprotein-Hydrolysat mit einem Proteingehalt in Trockenmasse von mindestens 75 Gew.-% Verwendung. Besonders geeignet ist in diesem Zusammenhang auch die Verwendung eines Molkenprotein-Isolats mit einem Proteingehalt in Trockenmasse von mindestens 90 Gew.-%.

Molkenprotein-Konzentrate, -Isolate und -Hydrolysate enthalten je nach Qualität noch einen deutlichen Anteil an Laktose. Laktose kann durch geeignete Methoden aus dem Produkt abgereichert werden. Eine Möglichkeit ist, die Molke zu konzentrieren und Laktose durch Kristallisation zu entfernen. Weiterhin ist der Abbau von Laktose durch enzymatische Hydrolyse möglich, wobei die Laktose zu Glucose und Galaktose gespalten wird. Dies kann durch das Enzym Lactase geschehen, das in sauren oder neutralen Enzym-Zubereitungen erhältlich ist. Eine Konzentration von Laktose im Trockenprodukt von kleiner 0,1 % wird üblicherweise als "laktosefrei" bezeichnet.

Gemäß einer bevorzugten Ausführungsform kann die eingesetzte Protein-Komponente, insbesondere das Molkenprotein-Konzentrat oder -Isolat oder -Hydrolysat, oder die Kreatin-Proteinmatrix laktosefrei sein. Durch Verwendung laktosefreier Mölkenprotein-Konzentrate kann ein Produkt und Nahrungsergänzungsmitttel bereitgestellt werden, dass besonders gut verträglich für den Anwender ist. Insbesonder kann somit eine Kreatin-Proteinmatrix hergestellt und angeboten werden, die von Anwendern mit Laktoseunverträglichkeit eingenommen werden kann.

Als laktosefrei wird im Zusammenhang mit der vorliegenden Erfindung eine Protein-Komponente oder eine Kreatin-Proteinmatrix verstanden, die im Wesentlichen frei von Laktose ist und herstellungsbedingt insbesondere höchstens 0,1 Gew.-% oder ganz besonders bevorzugt keine Laktose enthält.

Als Mineralstoff-Komponente können insbesondere die Alkali- und Erdalkalisalze der Phosphorsäure (Orthophosphorsäure), Diphosphorsäure oder Triphosphorsäure, Zitronensäure, Milchsäure, Gluconsäure, Doppelsalze oder Mischungen hiervon eingesetzt werden. Die Alkali- und Erdalkalisalze dieser Säuren sind teilweise schwerlösliche Salze, die natürlicherweise auch in der Milch vorkommen. Sie stellen nicht nur physiologisch wertvolle Bestandteile der Milch dar, sondern können auch dazu beitragen, die Proteinbestandteile der Milch zu stabilisieren, indem sie Chelate und/oder Komplexe bilden. Dies ist insbesondere für die zweiwertigen Kationen Ca²⁺ und Mg²⁺ der Fall. Bei der Fraktionierung der Milch werden auch die Mineralstoffe teilweise entfernt, so dass ein erneuter Zusatz dieser Stoffe zu der Protein-Kreatin-Matrix sinnvoll ist. So werden ernährungsphysiologisch wertvolle Mineralien zugesetzt, die sich durch das Herstellungsverfahren bedingt in vordosierter und definierter Menge im Zielprodukt befinden.

Als Mineralstoff-Komponente können besonders vorteilhaft Alkali- oder Erdalkalisalze der Phosphorsäure ausgewählt aus der Gruppe Natriumdihydrogenphosphat, Dinatriumhydrogenphosphat, Trinatriumphosphat, Calciumhydrogenphosphat, Tricalciumphosphat, Dicalciumdihydrogenphosphat, Calciumtetrahydrogenphosphat, Salze der Zitronensäure Natriumdihydrogencitrat, Dinatriumhydrogencitrat, Trinatriumcitrat, Calciumcitrat, Tricalciumdicitrat, Salze der Milchsäure Natriumlactat, Calciumlactat, Salze der Gluconsäure Natriumgluconat, Calciumgluconat oder Mischungen hiervon eingesetzt werden.

Überraschend hat sich gezeigt, dass sich auch die schwerlöslichen Calcium- und Magnesiumphosphate ohne Probleme (keine Sedimentation) in die Protein-Kreatin-Matrix einarbeiten lassen. Der sonst oft auftretende bittere Geschmack der Calcium- und Magnsiumsalze wird in dieser Matrix nicht wahrgenommen, da die Proteinkomponente den bitteren Geschmack maskiert. Insbesondere die Phosphate der zweiwertigen Kationen Calcium und Magnesium führen zu einer optischen Aufhellung des Produkts, was dieses noch ansprechender aussehen lässt.

Bei sportlicher Anstrengung ist ein ausgeglichener Elektrolythaushalt von entscheidender Bedeutung. Insbesondere für die zweiwertigen Ionen Ca²⁺ und Mg²⁺ verbessert sich in der Kreatin-Proteinmatrix die Aufnahme während des Verdauungsvorgangs. Zusätzlich sind hier synergistische Effekte zu erwarten, da insbesondere Calcium und Kreatin einen positiven Effekt auf die Knochengesundheit haben. Auch verstärken die Salze der Phosphorsäure in der Kreatin-Proteinmatrix die Pufferwirkung der beiden einzelnen Komponenten Protein und Kreatin, so dass sich das pH-Profil im Magen und damit die Verwertung und Aufnahme der Komponenten verbessert.

In einer weiteren Ausführungsform können die Alkali- und/oder Erdalkaliionen auch durch die Verwendung der Alkali- und/oder Erdalkalihydroxide in das Produkt eingebracht werden. Dies kann vorteilhaft so geschehen, dass die Alkali- und/oder Erdalkalihydroxide während der Herstellung des Produkts auch zur Einstellung des pH-Werts verwendet werden. Da die über die Alkali- und Erdalkalihydroxide einzubringende Menge der entsprechenden Ionen nur begrenzt ist - limitierend ist hier der pH-Wert - kann sich die zusätzliche Verwendung der Alkali- oder Erdalkalisalze der Phosphorsäure ausgewählt aus der Gruppe Natriumdihydrogenphosphat, Dinatriumhydrogenphosphat, Trinatriumphosphat, Calciumhydrogenphosphat, Tricalciumphosphat, Dicalciumdihydrogenphosphat, Calciumtetrahydrogenphosphat, Salze der Zitronensäure Natriumdihydrogencitrat, Dinatriumhydrogencitrat, Trinatriumcitrat, Calciumcitrat, Tricalciumdicitrat, Salze der Milchsäure Natriumlactat, Calciumlactat, Salze der Gluconsäure Natriumgluconat, Calciumgluconat oder Mischungen hiervon als notwendig erweisen.

Unter einer Kreatin-Proteinmatrix gemäß der vorliegenden soll Erfindung immer eine innige Mischung von Kreatin-Komponente mit der Protein-Komponente und optional der Mineralstoff-Komponente verstanden sein, in der diese Komponenten in fester Form vorliegen und derart co-prozessiert sind, dass diese Komponenten einerseits nicht einfach voneinander trennbar sind und andererseits homogen ineinander verteilt vorliegen. Die Protein-Komponente bildet dabei die eigentliche Matrix, in der die Kreatin-Komponente und optional die Mineralstoff-Komponente homogen verteilt oder dispergiert vorliegen.

Dabei weist eine erfindungsgemäße Kreatin-Proteinmatrix insbesondere eine sehr gleichmäßige Teilchengrößenverteilung mit einer mittleren Teilchengröße zwischen 10 und 250 µm, insbesondere zwischen 10 und 150 µm, insbesondere zwischen 10 und 100 µm und ganz besonders bevorzugt zwischen 10 und 80 µm auf. Diese Matrices zeigen Fließeigenschaften, die Protein-typisch sind. Sie können aufgrund ihrer Eigenschaften problemlos weiter verarbeitet werden, beispielsweise unter Verwendung entsprechender Hilfsstoffe auch zu Presskörpern (Tabletten) oder als Zutat zur Herstellung von Riegeln. Auch eine Instantisierung des Pulvers ist möglich, bei der Pulver mit einer mittleren Teilchengröße zwischen 100 und 250 µm erhalten werden.

Weiterhin überraschend zeigt die Kreatin-Proteinmatrix, insbesondere mit einer mittleren Teilchengröße zwischen 10 und 250 µm, insbesondere zwischen 10 und 200 µm, insbesondere zwischen 10 und 150 µm, insbesondere zwischen 10 und 100 µm und ganz besonders bevorzugt zwischen 10 und 80 µm, ein Protein-typisches Löse- oder Dispergierverhalten. Bezüglich der Kreatin-Komponente liegt jedoch ein deutlich verbessertes Löse- bzw. Dispergierverhalten vor, da bei einer üblichen Dosierung in Form eines Getränks (10 g Kreatin-Proteinmatrix in 100 mL Wasser) ein Getränk mit einem angenehmen Mundgefühl entsteht und keinerlei kristalliner Bodensatz zu bemerken ist. Dadurch liegen die Kreatin-Komponente und optional die Mineralstoff-Komponente in sehr gut bioverfügbarer Form vor.

Das Einrührverhalten der Kreatin-Proteinmatrix ist ebenfalls Protein-typisch und lässt sich mit geeigneten Instantisierungsmethoden noch optimieren. Dazu kann das Pulver beispielsweise einer Oberflächenbehandlung mit Lecithin unterworfen werden. Eine weitere Möglichkeit stellt die Agglomeration in einer Wirbelschichtapparatur dar, wobei ein poröses Agglomerat erhalten wird, dass sich im Vergleich zu dem Pulver als Solches sehr gut Wasser-benetzbar zeigt.

Weiterhin bevorzugt ist auch eine Kreatin-Proteinmatrix, die als Pulver vorliegt und die eine Schüttdichte von 250 - 500 g/L, insbesondere eine Schüttdichte von 340 - 450 g/L, aufweist.

Weiterhin bevorzugt ist der Anteil an Säuren und/oder Basen in der Kreatin-Proteinmatrix derart eingestellt, dass die Kreatin-Proteinmatrix bei Zugabe in Wasser einen pH-Wert von pH 7,0 bis 8,0, insbesondere einen pH-Wert von 7,1 bis 7,8, einstellt. Hierbei kann es vorteilhaft sein, dass zur Herstellung der Matrix eine Protein-Komponente gewählt wird, die ihrerseits bei Zugabe von Wasser einen pH-Wert von pH 7,0 bis 8,0, insbesondere einen pH-Wert von 7,1 bis 7,8 einstellt. Gleichzeitig oder alternativ kann auch der Produktionsprozess zur Herstellung der Matrix derart geführt werden, dass ein pH-Wert von pH 7,0 bis 8,0, insbesondere 7,1 bis 7,8, gehalten wird.

Wird der pH-Wert zu alkalisch gewählt (> pH 8,0) entstehen Ammoniakverbindungen, die den Geschmack und Geruch des Produktes negativ beeinflussen. Gleichermaßen darf der pH-Wert nicht zu niedrig gewählt werden (< pH 7,0), um außerdem die Umwandlung von Kreatin in Kreatinin zu verhindern, die insbesondere bei sauren pH-Werten (pH < 6) ausgeprägt ist.

Somit ist auch eine Kreatin-Proteinmatrix Gegenstand der Erfindung, die in Wasser einen pH-Wert von 7,0 bis 8,0, insbesondere einen pH-Wert von pH 7,1 bis 7,8, einstellt oder die eine Protein-Komponente umfasst, die ihrerseits in Wasser einen pH-Wert von pH 7,0 bis 8,0, insbesondere einen pH-Wert von pH 7,1 bis 7,8 einstellt.

Weiterhin bevorzugt gemäß der vorliegenden Erfindung ist eine Kreatin-Proteinmatrix, die einen kalorischen Brennwert von 700 bis 1700 KJ/100 g aufweist. Der kalorische Brennwert variiert hierbei in Abhängigkeit von der eingesetzten Protein-Komponente als auch der weiteren Bestandteile. Die Kreatin-Komponente sowie die Mineralstoff-Kompente leisten dabei keinen Beitrag zum kalorischen Brennwert, so dass dieser allein durch die verwendete Protein-Komponente und den Anteil der Protein-Komponente in der Matrix bestimmt ist. Besonders bevorzugt ist jedoch eine Kreatin-Proteinmatrix, die neben den aufgeführten Bestandteilen keine weiteren Zusätze an beispielsweise Kohlehydraten, Fetten oder weiteren Eiweißstoffen enthält. Diese Zusatzstoffe würden den kalorischen Brennwert der Matrix in einem Maße erhöhen, das nicht gewünscht ist.

So kann beispielsweise bei Verwendung eines WPIs mit 90 % Proteingehalt i. Tr. (1,2 % KH, 1 % Fett) und einem Proteinanteil in der Matrix von 85 % ein Produkt mit einem Kaloriengehalt von 1347 kJ/100 g erhalten werden. Wird statt eines Molkenprotein-Isolats ein Molkenprotein-Konzentrat (78% Protein i. Tr., 3,5 % KH, 1,5 % Fett) verwendet, reduziert sich der Kaloriengehalt auf 1224 kJ/100 g.

Verringert man den Proteinanteil in der Matrix auf 50 % unter Verwendung eines WPC-60 (61 % Protein i. Tr., 21 % KH, 5 % Fett) wird ein sehr geringer Kaloriengehalt von 790 kJ/100 g erhalten. Auf der anderen Seite kann der Kaloriengehalt durch geeignete Auswahl der Zutaten und Verhältnisse bis auf 1700 kJ/100 g erhöht werden. Damit lässt sich die Kreatin-Proteinmatrix auch hinsichtlich des Kaloriengehalts ganz den jeweiligen Bedürfnissen anpassen.

Gemäß einem weiterführenden Gedanken ist auch ein Nahrungsergänzungsmittel für Sportler von der vorliegenden Erfindung umfasst, das eine hiermit beschriebene Kreatin-Proteinmatrix umfasst oder enthält.

Zudem ist gemäß einem weiterführenden Gedanken auch ein Verfahren zur Herstellung einer pulverförmigen Kreatin-Proteinmatrix Gegenstand der vorliegenden Erfindung. Damit ist auch ein Verfahren zur Herstellung einer pulverförmigen Kreatin-Proteinmatrix Gegenstand der vorliegenden Erfindung, dass die Verfahrensschritte umfasst:
a) Bereitstellen einer wässrigen, pasteurisierten Lösung oder Suspension Lq1 umfassend mindestens eine Protein-Komponente ausgewählt aus der Gruppe der Molkenproteine, Molkenprotein-Konzentrate, Molkenprotein-Isolate, Molkenprotein-Hydrolysate oder Mischungen hiervon; und
b) Herstellen einer Lösung oder Suspension Lq2 durch gleichzeitiges oder nacheinander ausgeführtes Zugeben mindestens einer Kreatin-Komponente ausgewählt aus der Gruppe Kreatin oder ein Salz hiervon, Kreatin-Monohydrat oder Mischungen hiervon, und optional einer Salz-Komponente ausgewählt aus der Gruppe der Alkali- oder Erdalkalisalze der Phosphorsäure, Diphosphorsäure, Triphosphorsäure oder Mischungen hiervon, zur bereitgestellten Lösung oder Suspension Lq1; und
c) Trocknen der hergestellten Lösung oder Suspensionen Lq2 mittels Sprühtrocknungs-, Dünnschichtverdampfungs- oder Walzentrocknungsverfahren.

Dabei hat sich besonders überraschen und nicht vorhersehbar gezeigt, dass durch den Verfahrensschritt c) ein Produkt mit einer besonders homogenen Verteilung der Komponenten bereitgestellt werden kann. Diese somit hergestellte Kreatin-Proteinmatrix weist insbesondere eine besonders homogene Verteilung der Kreatin-Komponente und der Mineralstoff-Komponente in der Protein-Komponente auf. Zudem kann somit ein Produkt zur Verfügung gestellt werden, in dem Kreatinfeinverteilt in amorpher Form und somit in einer sehr schnell löslichen Form vorliegt.

In einem bevorzugten Verfahren ist dabei insbesondere auch vorgesehen, dass die Kreatin-Komponente erste kurz vor dem Trocknen zu der pasteurisierten Lösung oder Suspension Lq1 zugegeben wird. Der Zeitraum sollte 3 Std. nicht übersteigen, insbesondere sollte er 1 Stunde nicht übersteigen. Besonders bevorzugt sollte die Kreatin-Komponente erst 30 min vor der Trocknung zur Lösung oder Suspension Lq1 gegeben werden. Dabei hat die Zugabe nach der Pasteurisierung überraschenderweise keinen negativen Einfluss auf die mikrobiologischen Eigenschaften des Produkts. Zudem wird trotz der normalerweise recht geringen Löslichkeit von Kreatin MH eine homogene Aufschlämmung erhalten, die zu einem äußerst homogenen End-Produkt führt.

Weiterhin bevorzugt wird in dem Verfahren eine Lösung oder Suspension Lq1 verwendet, die laktosefrei ist und/oder ein Molkenprotein-Konzentrat, -Isolat oder -Hydrolysat mit einem Protein-Gehalt von mindestens 60 Gew.-% (in Trockenmasse) enthält. Dies ist so zu verstehen, dass, würde man die Lösung Lq1 ohne Zugabe weiterer Zutaten trocknen, das jeweilig genannte Produkt, nämlich ein Molkenprotein-Konzentrat, -Isolat oder -Hydrolysat, anfallen würde.

Weiterhin vorteilhaft wird die Kreatin-Komponente bei Temperaturen zwischen 20 °C und 30 °C und weiterhin bevorzugt bei einem pH-Wert zwischen pH 7,0 und pH 8,0, insbesondere zwischen pH 7,1 und pH 7,8 zu der pasteurisierten Lösung oder Suspension Lq1 zugegeben. Die Einstellung des pH-Werts erfolgt dabei vorteilhaft unter Verwendung von Alkali- und/oder Erdalkalihydroxiden, wie Natriumhydroxid, Kaliumhyroxid, Magnesiumhydroxid und/oder Calciumhydroxid. Die Zugabe der Kreatin-Komponente erfolgt dabei in jedem Fall erst nach der Pasteurisierung der Protein-Komponente.

Ganz besonders bevorzugt wird bei dem Heißtrocknen die Temperatur so eingestellt, dass die Produkttemperatur zwischen 50 °C und 120 °C liegt, insbesondere zwischen 60 und 100 °C, besonders bevorzugt zwischen 60 und 90 °C. Dabei kann trotz der Temperaturbelastung während des Trocknens ein Produkt erhalten werden, dass unerwartet einen sehr geringen Kreatinin-Gehalt aufweist. Dies überrascht umso mehr, als dass bekannt ist, dass Kreatin bei Temperaturbelastung sehr rasch in das vom Körper nicht verwertbare Kreatinin umgewandelt wird. Zudem wird ein frei fließendes, lagerstabiles Produkt erhalten, bei dem kein weiterer Zusatz von Fließhilfs- oder Trennmitteln nötig ist. Es tritt durch die Anwesenheit von Kreatin-Komponente und der Mineralstoff-Komponente keine Verfärbung auf. Vielmehr wird ein überraschend helles Produkt erhalten.

Ohne an die Theorie gebunden zu sein scheint durch die Prozessführung eine Matrix realisierbar zu sein, in der die Kreatin-Komponente sehr fein dispergiert in der Protein-Komponente vorliegt. Dabei wird sogar der Effekt beobachtet, dass die Kreatin-Komponente nicht länger kristallin vorliegt, sondern in den amorphen Zustand übergegangen ist. Bei den gewählten Trocknungsarten wird der homogene Zustand der Lösung konserviert, indem das Wasser schlagartig verdampft wird.

Im Fall der Sprühtrockung wird die zu trocknende Lösung oder Suspension in einem Trockenturm mit Zerstäubungsdüsen oder Rotationsdüsen fein zerstäubt. Dabei wird die Lösung oder Suspension mit einem Druck von 2 bis 20 bar zerstäubt. Durch Schwerkraft fallen die Tröpfchen in der zugeführten Trocknungsluft nach unten, wobei sie innerhalb von Sekunden trocknen. Die Trocknungsluft wird mit einer Temperatur von 120 bis 200 °C zugeführt, während im Trockner eine Temperatur zwischen 70 und 90 °C herrscht. Das Produkt kommt am unteren Ende des Trockners als pulvriges oder flockiges Trockengut an.

Gemäß einer besonders bevorzugten Ausführung des Verfahrens ist dabei auch vorgesehen, dass die Lösung oder Suspension Lq1 mindestens 30 Gew.-% Trockenmasse enthält.

Im Fall der Walzen- oder Dünnschichttrockner wird die Suspension in Form eines dünnen Films getrocknet. Das geschieht entweder auf einer beheizten Walze oder auf der Innenseite eines beheizten Rohres. Die Temperatur der Walze bzw. des Rohrs beträgt zwischen 105 und 155 °C. Durch Anlegen von Vakuum kann die Temperatur der Walze oder des Rohrs unter 100 °C reduziert werden. Das Trockengut wird anschließend von der Walze oder Innenwand abgeschabt. Die erhaltenen Blättchen werden mittels einer Mühle zerkleinert und können so auf die gewünschte Teilchengröße eingestellt werden.

All diese Trocknungsverfahren lassen sich derart steuern, dass ein Produkt mit einer sehr gleichmäßige Teilchengrößenverteilung mit einer mittleren Teilchengröße zwischen 10 und 250 µm, insbesondere zwischen 10 und 200 µm, insbesondere zwischen 10 und 100 µm und ganz besonders bevorzugt zwischen 10 und 80 µm, erhalten wird.

Im Folgenden wird die vorliegende Erfindung anhand von Beispielen erläutert, wobei die Erfindung jedoch nicht auf die Beispiele reduziert verstanden werden soll. Es ist vielmehr der Fall, dass jede Kombination von bevorzugten Ausführungen ebenfalls von der vorliegenden Erfindung umfasst wird. Hierbei zeigen die Abbildungen

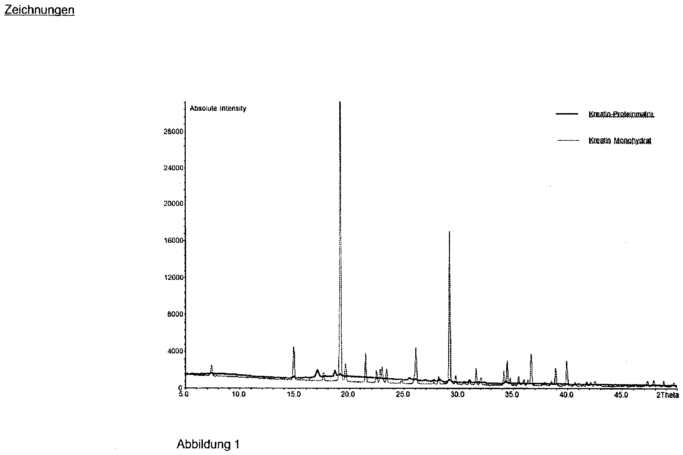

### Abbildung 1: Vergleich und Darstellung der Pulverdiffraktiogramme einer erfindungsgemäßen Matrix und von kristallinem KreatinMonohydrat

### Beispiele

Die in den folgenden Beispielen verwendeten Molkenprotein-Retentate oder -Lösungen liefern je nach vorhergegangener Behandlung formal entweder Molkenprotein-Konzentrate (WPC), Molkenprotein-Isolate (WPI) oder Molkenprotein-Hydrolysate (WPH). Dies ist so zu verstehen, dass, würde man die Lösung Lq1 ohne Zugabe weiterer Zutaten trocknen, das jeweilig genannte Produkt, nämlich ein Molkenprotein-Konzentrat, -Isolat oder -Hydrolysat, anfallen würde.

### Testmethoden

### 1) Segregation

Die Homogenität der Kreatin-Proteinmatrix kann mittels eines Segregationstests überprüft werden. Dabei werden die Kreatin-Proteinmatrix und eine einfache Mischung (blend) aus den drei Bestandteilen miteinander verglichen. Beide Formulierungen werden vor dem Test nochmals gründlich durchmischt. Für den Test wird die Testmischung in einem Trichter vorgelegt. Aus dem Trichter lässt man das Produkt auf ein Förderband rieseln, das das Produkt zu einem zylindrischen Auffangbehälter transportiert. In diesem Auffangbehälter baut sich ein Kegel aus Testmaterial auf, wobei sich das feine Material im inneren Teil des Kegels anreichert, während das grobe Material auf den Außenflanken entlang rollt. Durch eine zentrische Öffnung kann der innere Teil des Kegels aus dem Auffanggefäß entnommen werden, während der äußere Teil des Kegels im Gefäß verbleibt. Die so erhaltenen Fraktionen können nun auf ihre Zusammensetzung untersucht werden. Die Homogenität wird mittels der Kovarianz CV = SD x 100 / Mittelwert bestimmt, wobei der Mittelwert über alle Analysenergebnisse (Kegelkern und Außenflanken) bestimmt wird. Ist CV < 30 % kann von einer homogenen Mischung und einer geringen Entmischungsneigung, liegt CV zwischen 30 und 40 % von einer mittleren Entmischungsneigung und bei CV > 40 % von einer hohen Entmischungsneigung ausgegangen werden.

### 2) Teilchengrößenverteilung

Die Teilchengrößenverteilung des Produkts wird mittels Laserbeugung bestimmt. Diese Vorgehensweise ist insbesondere für Pulver mit einer Teilchengröße < 1000 µm geeignet. Anforderungen und Hinweise hinsichtlich des Gerätedesigns, der Systemverifizierung, Probenahme, Probenmessung und der Modelle für die Berechnung der Teilchengrößenverteilung aus dem Lichtstreumuster können der ISO 13320:2009 entnommen werden.

Für die Messung werden 10 g Probe über eine Transportrinne in den Probenraum eingebracht, der von einem Laser durchstrahlt wird. Durch die einfallenden Teilchenfindet eine Brechung bzw. Beugung des Laserstrahls in Abhängigkeit von der Teilchengröße statt. Die Daten können mittels Fourier-Transformation in eine Teilchengrößenverteilung umgerechnet werden. Aus der Teilchengrößenverteilung kann die mittlere Teilchengröße (x50-Wert) in µm abgelesen werden.

### 3) Schüttdichte

Für die Schüttdichte werden 200 g Probe über einen Trichter freifließend in einen Messzylinder eingefüllt. Der Messzylinder mit Probe wird 10 Minuten stehen gelassen, und anschließend wird das Volumen abgelesen. Die Schüttdichte wird in g/L angegeben.

### 4) Inhaltstoffe

Kreatin und Kreatinin werden per HPLC bestimmt.

Die Bestimmung des Proteingehalts wird zunächst der Stickstoffgehalt mittels der Dumas- oder der Kjeldahl-Methode bestimmt. Über einen Umrechnungsfaktor (N x 6,38 oder N x 6,25) lässt sich der Proteingehalt berechnen, der um den Anteil des enthaltenen Kreatins korrigiert werden muss. Na, K, Ca und Mg werden mittels Atomabsorptionsspektrometrie bestimmt.

### Beispiel 1

### a) Herstellung der pulverförmigen Kreatin-Proteinmatrix

1400 kg ultrafiltriertes Molkenprotein-Retentat (laktosefrei (max. 0,1 % i.Tr.), 40 % Trockenmasse, Proteingehalt 81 % i. Tr., pH-Wert: 7,0 bis 7,4) werden nach Pasteurisierung in einem Vorlagebehälter vorgelegt, der auf 30 °C temperiert ist. Das Retentat wird ständig gerührt. In diesen Behälter werden 108 kg Kreatin MH, gefolgt von 14 kg Tricalciumorthophosphat dosiert (Feststoffdosierung). Die Mischung wird 30 Minuten kräftig gerührt, bis eine homogene, trübe Lösung vorliegt. Anschließend wird der pH-Wert kontrolliert und optional mit wässriger NaOH auf 7,2 bis 7,4 nachgestellt. Die so erhaltene trübe Lösung wird über eine Heißhaltestrecke (80 °C, 65 Sekunden) auf den Sprühturm geleitet und sprühgetrocknet. Die Lufteintrittstemperatur beträgt 160 °C, während im Sprühturm eine Temperatur von 78 °C herrscht. Es werden etwa 650 kg eines weißen bis hell-beigen Pulvers erhalten.

### b) Charakterisierung der pulverförmigen Kreatin-Proteinmatrix

Das Pulver hat folgende Zusammensetzung: 81 Gew.-% Molkenprotein-Konzentrat 14 Gew.-% Kreatin, 2 Gew.-% Tricalciumorthophosphat, 3 Gew.-% Wasser.
Laktosegehalt: < 0,1 %
Kreatiningehalt: < 0,05 %
mittlere Teilchengröße: x50-Wert: 35 µm
Schüttdichte: 400 g/L
Kaloriengehalt: 1300 kJ/100 g
Segregationstest: CV < 5 %

Die erhaltene Kreatin-Proteinmatrix gemäß Beispiel 1 ist eine innige Mischung der Kreatin-Komponente und der Protein-Komponente, in der die Komponenten voneinander nicht trennbar vorliegen. Hierbei liegt das Kreatin homogen verteilt und amorph in der Protein-Matrix vor. Die Matrix erzeugt in Wasser einen pH-Wert von pH 7,2.

Der amorphe Zustand von Kreatin wird anhand der Abbildungen 1 deutlich.

Gezeigt ist der Vergleich zwischen kristallinem Kreatin Monohydrat und einer Kreatin-Proteinmatrix. Es sind die absoluten Intensitäten der Signale über dem Beugungswinkel aufgetragen. Aus dem Vergleich der Kurven wird ersichtlich, dass im Fall der co-prozessierten Mischung nur noch schwache Signale aufgezeichnet werden, die sich zudem nicht mit Kreatin Monohydrat korrelieren lassen. Die Abwesenheit scharfer Beugungsreflexe ist ein Anzeichen dafür, dass in dem Produkt kaum noch oder keine kristallinen Bestandteile mehr enthalten sind, es also amorph vorliegt.

Für den Verbraucher liegt mit der Kreatin-Proteinmatrix eine einfach dosierbare Form dieses Nahrungsergänzungsmittels vor. Das Produkt kann beispielsweise einfach abgefüllt werden, mit weiteren Zutaten (Kohlenhydraten, Fetten, Vitaminen, Süßungsmittel etc.) versehen werden oder auch als Zutat für die Zubereitung von Lebensmitteln, wie beispielsweise Riegel, dienen. Für den direkten Verzehr erfolgt vorteilhafter Weise eine Aromatisierung des Pulvers und unter Umständen der Zusatz eines Farbstoffs.

### Beispiel 2

### a) Herstellung

1400 kg teilhydrolysiertes Molkenprotein-Retentat (40 % Trockenmasse, pH-Wert: 7,2 bis 7,4, Proteingehalt 79 % i. Tr.) werden nach Pasteurisierung in einem Vorlagebehälter vorgelegt, der auf 30 °C temperiert ist. In diesen Behälter werden 49 kg Kreatin MH, gefolgt von 10 kg Trimagnesiumorthophosphat dosiert (Feststoffdosierung). Die Mischung wird 20 Minuten kräftig gerührt, bis eine leicht trübe Lösung vorliegt. Anschließend wird der pH-Wert kontrolliert und optional mit NaOH auf 7,1 bis 7,4 nachgestellt. Die so erhaltene Suspension/Paste wird bei 3,5 bar und 120 °C Walzentemperatur auf einem Walzentrockner getrocknet. Weitere Bedingungen: Walzenumdrehung 10 UpM. Die erhaltenen Schuppen werden mittels einer Pulver-Mühle pulverisiert.Es werden etwa 610 kg eines weißen bis hell-beigen Pulvers erhalten.

### b) Charakterisierung

Das Pulver hat folgende Zusammensetzung: 90,4 Gew.-% Molkenprotein-Hydrolysat, 7 Gew.-% Kreatin, 1,6 Gew.-% Trimagnesiumorthophosphat, 1 Gew.-% Wasser.
Kreatiningehalt: < 0,05 %
Schüttdichte: 250 g/L
mittlere Teilchengröße: x50-Wert: 200 µm
Kaloriengehalt: 1455 kJ/100 g
Segregationstest: CV < 5 %

Die erhaltene Kreatin-Proteinmatrix gemäß Beispiel 2 ist eine innige Mischung der Kreatin-Komponente und der Protein-Komponente, in der die Komponente voneinander nicht trennbar vorliegen. Hierbei liegt das Kreatin homogen verteilt und amorph in der Protein-Matrix vor. Die Matrix erzeugt in Wasser einen pH-Wert von pH 7,3.

### Beispiel 3

### a) Herstellung

1400 kg ultrafiltriertes Molkenprotein-Retentat (50 % Trockenmasse, pH-Wert: 7,1 bis 7,2, Proteingehalt 62 % i. Tr.) werden nach Pasteurisierung in einem Vorlagebehälter vorgelegt, der auf 35 °C temperiert ist. In diesen Behälter werden 264 kg Kreatin MH, gefolgt von 46,6 kg Tricalciumdicitrat dosiert (Feststoffdosierung). Die Mischung wird für 40 Minuten kräftig gerührt, so dass eine homogene Suspension/Paste vorliegt. Anschließend wird der pH-Wert kontrolliert und optional mit KOH auf 7,1 bis 7,2 nachgestellt. Die so erhaltene trübe Lösung wird wie in Beispiel 1 getrocknet.

### b) Charakterisierung

Das Pulver hat folgende Zusammensetzung: 69 Gew.-% Molkenprotein-Konzentrat, 23 Gew.-% Kreatin, 5 Gew.-% Tricalciumdicitrat, 3 Gew.-% Wasser.
Kreatiningehalt: < 0,05 %
mittlere Teilchengröße: x50-Wert: 55 µm
Schüttdichte: 280 g/L
Kaloriengehalt: 940 kJ/100 g
Segregationstest: CV < 5 %

Die erhaltene Kreatin-Proteinmatrix gemäß Beispiel 3 ist eine innige Mischung der Kreatin-Komponente und der Protein-Komponente, in der die Komponente voneinander nicht trennbar vorliegen. Hierbei liegt das Kreatin homogen verteilt und amorph in der Protein-Matrix vor. Die Matrix erzeugt in Wasser einen pH-Wert von pH 7,2.

### Beispiel 4

### a) Herstellung

2500 kg Molkenprotein-Lösung(40 % Trockenmasse, pH-Wert: 7,1 bis 7,4, Proteingehalt 93 % i. Tr.) werden nach Pasteurisierung in einem Vorlagebehälter vorgelegt, der auf 50 °C temperiert ist. In einem zweiten Behälter werden 800 kg Kreatin MH bei 20 °C in 1000 L Wasser aufgeschlämmt. Das Retentat und die Kreatin -Suspension werden in einem dritten Behälter kontinuierlich und hochturbulent miteinander vermischt und anschließend sofort über eine Heißhaltestrecke (Temperatur: 85 °C, 45 Sekunden). auf den Sprühturm geleitet und sprühgetrocknet. Die Lufteintrittstemperatur beträgt 170 °C, die Sprühturmtemperatur 85 °C. Es werden etwa 1660 kg eines weißen bis hell-beigen Pulvers erhalten.

### b) Charakterisierung

Das Pulver hat folgende Zusammensetzung: 56,9 Gew.-% Molkenprotein-Isolat, 40,0 Gew.-% Kreatin, 3 Gew.-% Wasser.
Kreatiningehalt: < 0,05 %
mittlere Teilchengröße: x50-Wert: 40 µm
Schüttdichte: 420 g/L
Kaloriengehalt: 940 kJ/100 g
Segregationstest: CV < 5 %

Die erhaltene Kreatin-Proteinmatrix gemäß Beispiel 4 ist eine innige Mischung der Kreatin-Komponente und der Protein-Komponente, in der die Komponente voneinander nicht trennbar vorliegen. Hierbei liegt das Kreatin homogen verteilt und amorph in der Protein-Matrix vor. Die Matrix erzeugt in Wasser einen pH-Wert von pH 7,1.

### Beispiel 5

### a) Herstellung

2000 kg ultrafiltriertes Molkenprotein-Retentat (40 % Trockenmasse, pH-Wert: 7,1 bis 7,3, Proteingehalt 79 % i. Tr.) werden mit 236 kg Kreatin MH und 10 kgCalciumlactat versetzt, sehr gut durchmischt und die gesamte Mischung wird für 5 Minuten bei 62 °C pasteurisiert. Anschließend wird die Mischung auf 30 °C abgekühlt. Die so erhaltene trübe Lösung wird über eine Heißhaltestrecke (90 °C, 30 Sekunden) auf den Sprühturm geleitet und sprühgetrocknet. Es werden etwa 1005 kg eines weißen bis hell-beigen Pulvers erhalten.

### b) Charakterisierung

Das Pulver hat folgende Zusammensetzung: 75,5 Gew.-% Molkenprotein-Konzentrat, 18,6 Gew.-% Kreatin, 1,0 Gew.-% Calciumlactat, 4 Gew.-% Wasser.
Kreatiningehalt: 0,9 %
Kaloriengehalt: 1190 kJ/100 g
Segregationstest: CV < 5 %

### Beispiel 6

### a) Herstellung der pulverförmigen Kreatin-Proteinmatrix

1990 kg ultrafiltriertes Molkenprotein-Retentat (laktosefrei (max. 0,1 % i. Tr.), 40 % Trockenmasse, Proteingehalt 80 % i. Tr., pH-Wert: 7,0 bis 7,4) werden nach Pasteurisierung in einem Vorlagebehälter vorgelegt, der auf 30 °C temperiert ist. Das Retentat wird ständig gerührt. In diesen Behälter werden 205 kg Kreatin MH dosiert (Feststoffdosierung). Die Mischung wird 30 Minuten kräftig gerührt, bis eine homogene, trübe Lösung vorliegt. Anschließend wird der pH-Wert kontrolliert und optional mit wässriger NaOH auf 7,2 bis 7,4 nachgestellt. Die so erhaltene trübe Lösung wird über eine Heißhaltestrecke (80 °C, 70 Sekunden) auf den Sprühturm geleitet und sprühgetrocknet. Die Lufteintrittstemperatur beträgt 160 °C, während im Sprühturm eine Temperatur von 75 °C herrscht. Es werden etwa 990 kg eines weißen bis hell-beigen Pulvers erhalten.

### b) Charakterisierung der pulverförmigen Kreatin-Proteinmatrix

Das Pulver hat folgende Zusammensetzung: 79 Gew.-% Molkenprotein-Konzentrat, 18 Gew.-% Kreatin, 3 Gew.-% Wasser.
Laktosegehalt: < 0,1 %
Kreatiningehalt: < 0,05 %
mittlere Teilchengröße: x50-Wert: 45 µm
Schüttdichte: 420 g/L
Kaloriengehalt: 1220 kJ/100g
Segregationstest: CV < 5 %

### Beispiel 7

Wie Beispiel 1, jedoch wird statt Tricalciumorthophosphat Calciumcitrat verwendet.

## Patentansprüche

1. Kreatin-Proteinmatrix umfassend
i) mindestens eine Protein-Komponente ausgewählt aus der Gruppe der Molkenprotein- Konzentrate, Molkenprotein-Isolate, Molkenprotein-Hydrolysate oder Mischungen hiervon mit einem Proteingehalt in Trockenmasse von mind. 55 Gew.-% und
ii) mindestens eine Kreatin-Komponente ausgewählt aus der Gruppe Kreatin oder ein Salz hiervon, Kreatin-Monohydrat oder Mischungen hiervon
**dadurch gekennzeichnet, dass** die Kreatin-Proteinmatrix als Pulver mit einer mittleren Teilchengröße von 10 bis 250 µm vorliegt und mindestens 50 % des Pulvers Teilchen enthält, von denen jedes einzelne Teilchen sowohl die Kreatin-Komponente als auch die Protein-Komponente umfasst.

2. Kreatin-Proteinmatrix nach Anspruch 1, **dadurch gekennzeichnet, dass** die Kreatin-Proteinmatrix weiterhin
iii) mindestens eine Mineralstoff-Komponente ausgewählt aus der Gruppe der Alkali- oder Erdalkalisalze der Phosphorsäure, Diphosphorsäure, Triphosphorsäure, Zitronensäure, Milchsäure, Gluconsäure, Doppelsalze oder Mischungen hiervon umfasst,
wobei die Kreatin-Komponente und die Mineralstoff-Komponente dispergiert in der Protein- Komponente vorliegen.

3. Kreatin-Proteinmatrix nach Anspruch 1 oder 2, **dadurch gekennzeichnet, dass** die Kreatin- Proteinmatrix
| | | |
|---|---|---|
| i) | 50 bis 95 Gew.-% | Protein-Komponente und |
| ii) | 5 bis 40 Gew.-% | Kreatin-Komponente und optional |
| iii) | 0 bis 10 Gew.-% | Mineralstoff-Komponente, |
| | wobei die Matrix | |
| iv) | höchstens 10 Gew.-% | Wasser |
umfasst.

4. Kreatin-Proteinmatrix gemäß mindestens einem der vorgenannten Ansprüche, **dadurch gekennzeichnet, dass** die Kreatin-Proteinmatrix oder die Protein-Komponente laktosefrei ist.

5. Kreatin-Proteinmatrix gemäß mindestens einem der vorgenannten Ansprüche, **dadurch gekennzeichnet, dass** die Protein-Komponente ein Molkenprotein-Konzentrat, ein Molkenprotein-Isolat oder ein Molkenprotein-Hydrolysat mit einem Proteingehalt von mindestens 75 Gew.-% Protein ist.

6. Kreatin-Proteinmatrix gemäß mindestens einem der vorgenannten Ansprüche, **dadurch gekennzeichnet, dass** die Kreatin-Proteinmatrix oder die Protein-Komponente höchstens 10 Gew.-% Fette und/oder höchstens 10 Gew.-% Wasser umfasst.

7. Kreatin-Proteinmatrix gemäß mindestens einem der vorgenannten Ansprüche, **dadurch gekennzeichnet, dass** das Alkalioder Erdalkalisalz der Phosphorsäure, Diphosphorsäure, Triphosphorsäure, Zitronensäure, Milchsäure oder Gluconsäure ausgewählt wird aus der Gruppe Natriumdihydrogenphosphat, Dinatriumhydrogenphosphat, Trinatriumphosphat, Calciumhydrogenphosphat, Tricalciumphosphat, Dicalciumdihydrogenphosphat, Calciumtetrahydrogenphosphat, Natriumdihydrogencitrat, Dinatriumhydrogencitrat, Trinatriumcitrat, Calciumcitrat, Tricalciumdicitrat, Natriumlactat, Calciumlactat, Natriumgluconat, Calciumgluconat.

8. Kreatin-Proteinmatrix gemäß mindestens einem der vorgenannten Ansprüche, **dadurch gekennzeichnet, dass** die Kreatin-Proteinmatrix als Pulver mit einer mittleren Teilchengröße von 10 bis 100 µm vorliegt.

9. Kreatin-Proteinmatrix gemäß mindestens einem der vorgenannten Ansprüche, **dadurch gekennzeichnet, dass** das die Kreatin-Proteinmatrix oder die Protein-Komponente in Wasser einen pH-Wert von pH 7,0 bis 8,0, insbesondere einen pH-Wert von pH 7, 1 bis 7,8 einstellt.

10. Kreatin-Proteinmatrix gemäß mindestens einem der vorgenannten Ansprüche, **dadurch gekennzeichnet, dass** das die Kreatin-Proteinmatrix einen kalorischen Brennwert von 700 bis 1700 kJ/ 100 g aufweist.

11. Nahrungsergänzungsmittel für Sportler umfassend oder enthaltend, mindestens eine Kreatin-Proteinmatrix gemäß mindestens einem der vorgenannten Ansprüche.

12. Verfahren zur Herstellung einer pulverförmigen Kreatin-Proteinmatrixnach mindestens einem der vorgenannten Ansprüche 1 bis 11 umfassend die Verfahrensschritte:
a) Bereitstellen einer wässrigen, pasteurisierten Lösung oder Suspension Lq1 umfassend mindestens eine Protein-Komponente ausgewählt aus der Gruppe der Molkenprotein-Konzentrate, Molkenprotein-Isolate, Molkenprotein-Hydrolysate oder Mischungen hiervon mit einem Proteingehalt in Trockenmasse von mind. 55 Gew.-%; und
b) Herstellen einer Lösung oder Suspension Lq2 durch gleichzeitiges oder nacheinander ausgeführtes Zugeben mindestens einer Kreatin-Komponente ausgewählt aus der Gruppe Kreatin oder ein Salz hiervon, Kreatin-Monohydrat oder Mischungen hiervon, und optional mindestens einer Mineralstoff-Komponente ausgewählt aus der Gruppe der Alkali- oder Erdalkalisalze der Phosphorsäure, Diphosphorsäure, Triphosphorsäure, Zitronensäure, Milchsäure, Gluconsäure oder Mischungen hiervon, zur bereitgestellten Lösung oder Suspension Lq1; und
c) Trocknen der hergestellten Lösung oder Suspensionen Lq2 mittels Sprühtrocknungs-, Dünnschichtverdampfungs- oder Walzentrocknungsverfahren.

13. Verfahren gemäß Anspruch 12, **dadurch gekennzeichnet, dass** die Lösung oder Suspension Lq1 laktosefrei ist und/ oder ein Molkenprotein-Konzentrat, ein Molkenprotein-Isolat oder ein Molkenprotein-Hydrolysat mit einen Proteingehalt von mindestens 55 Gew.-% (in Trockensubstanz) umfasst.

14. Verfahren gemäß Anspruch 12 oder 13, **dadurch gekennzeichnet, dass** die Lösung oder Suspension Lq1 mindestens 30 Gew.-% Trockenmasse enthält.

15. Verfahren gemäß Anspruch 12 bis 14, **dadurch gekennzeichnet, dass** die Lösung Lq2 nach der Zugabe der Kreatin-Komponente und optional der Mineralstoff-Komponente mittels einer Base auf einen pH-Wert von pH 7,0 bis 8,0, insbesondere auf einen pH-Wert von pH 7, 1 bis 7,8 eingestellt wird.

16. Industriell hergestellte pulverförmige Kreatin-Proteinmatrix nach mindestens einem der vorgenannten Ansprüche 1 bis 11 hergestellt nach einem Verfahren gemäß mindestens einem der Ansprüche 12 bis 15.

## Claims

1. Creatine-protein matrix comprising
i) at least one protein component selected from the group of whey protein concentrates, whey protein isolates, when protein hydrolysates or mixtures thereof, having a dry matter protein content of at least 55 wt.%, and
ii) at least one creatine component selected from the group of creatine or a salt thereof, creatine monohydrate or mixtures thereof,
**characterised in that** the creatine-protein matrix is a powder having an average particle size of from 10 to 250 µm and at least 50 % of the powder contains particles, each individual particle of which comprises both the creatine component and the protein component.

2. Creatine-protein matrix according to claim 1, **characterised in that** the creatine-protein matrix further comprises
iii) at least one mineral component selected from the group of alkaline salts or alkaline earth salts of phosphoric acid, diphosphoric acid, triphosphoric acid, citric acid, lactic acid, gluconic acid, double salts or mixtures thereof,
the creatine component and the mineral component being dispersed in the protein component.

3. Creatine-protein matrix according to either claim 1 or claim 2, **characterised in that** the creatine-protein matrix comprises
i) from 50 to 95 wt.% of the protein component, and
ii) from 5 to 40 wt.% of the creatine component, and optionally
iii) from 0 to 10 wt.% of the mineral component,
the matrix comprising
iv) no more than 10 wt.% water.

4. Creatine-protein matrix according to at least one of the preceding claims, **characterised in that** the creatine-protein matrix or the protein component is lactose-free.

5. Creatine-protein matrix according to at least one of the preceding claims, **characterised in that** the protein component is a whey protein concentrate, a whey protein isolate or a whey protein hydrolysate having a protein content of at least 75 wt.%.

6. Creatine-protein matrix according to at least one of the preceding claims, **characterised in that** the creatine-protein matrix or the protein component comprises no more than 10 wt.% fat and/or no more than 10 wt.% water.

7. Creatine-protein matrix according to at least one of the preceding claims, **characterised in that** the alkaline salt or alkaline earth salt of phosphoric acid, diphosphoric acid, triphosphoric acid, citric acid, lactic acid or gluconic acid is selected from the group of sodium dihydrogen phosphate, disodium hydrogen phosphate, trisodium phosphate, calcium hydrogen phosphate, tricalcium phosphate, dicalcium dihydrogen phosphate, calcium tetrahydrogen phosphate, sodium dihydrogen citrate, disodium hydrogen citrate, trisodium citrate, calcium citrate, tricalcium dicitrate, sodium lactate, calcium lactate, sodium gluconate and calcium gluconate.

8. Creatine-protein matrix according to at least one of the preceding claims, **characterised in that** the creatine-protein matrix is a powder having an average particle size of from 10 to 100 µm.

9. Creatine-protein matrix according to at least one of the preceding claims, **characterised in that**, in water, the creatine-protein matrix or the protein component has a pH of from 7.0 to 8.0, in particular from 7.1 to 7.8.

10. Creatine-protein matrix according to at least one of the preceding claims, **characterised in that** the creatine-protein matrix has a calorific value of from 700 to 1700 kJ/100g.

11. Food supplement for sportspeople comprising or containing at least one creatine-protein matrix according to at least one of the preceding claims.

12. Method for producing a creatine-protein matrix powder according to at least one of preceding claims 1 to 11, comprising the method steps of:
a) providing an aqueous, pasteurised solution or suspension Lq1 comprising at least one protein component selected from the group of whey protein concentrates, whey protein isolates, whey protein hydrolysates or mixtures thereof, having a dry matter protein content of at least 55 wt.%, and
b) producing a solution or suspension Lq2 by simultaneously or successively adding at least one creatine component selected from the group of creatine or a salt thereof, creatine monohydrate or mixtures thereof, and optionally at least one mineral component selected from the group of alkaline salts or alkaline earth salts of phosphoric acid, diphosphoric acid, triphosphoric acid, citric acid, lactic acid, gluconic acid or mixtures thereof, to the solution or suspension Lq1 provided, and
c) drying the solution or suspension Lq2 produced by means of spray drying, thin-film evaporation or drum drying.

13. Method according to claim 12, **characterised in that** the solution or suspension Lq1 is lactose-free and/or comprises a whey protein concentrate, a whey protein isolate or a whey protein hydrolysate having a protein content of at least 55 wt.% (in dry form).

14. Method according to either claim 12 or claim 13, **characterised in that** the solution or suspension Lq1 contains at least 30 wt.% dry matter.

15. Method according to claims 12 to 14, **characterised in that**, after the creatine component and optionally the mineral component have been added, the pH of the solution Lq2 is adjusted to from 7.0 to 8.0, in particular to from 7.1 to 7.8, by means of a base.

16. Industrially produced creatine-protein matrix powder according to at least one of preceding claims 1 to 11, which is produced according to a method according to at least one of claims 12 to 15.

## Revendications

1. Matrice de protéines-créatine, comprenant
i) au moins un composant de protéines choisi dans le groupe des concentrés de protéines de petit-lait, des isolats de protéines de petit-lait, des hydrolysats de protéines de petit-lait ou des mélanges de ceux-ci, avec une teneur en protéines en matière sèche d'au minimum 55 % en poids, et
ii) au moins un composant de créatine choisi dans le groupe de la créatine ou d'un sel de celle-ci, du monohydrate de créatine ou des mélanges de ceux-ci,
**caractérisée en ce que** la matrice de protéines-créatine se présente sous la forme d'une poudre avec une taille moyenne de particules de 10 à 250 µm et au moins 50 % de la poudre contient des particules dont chaque particule individuelle comprend aussi bien le composant de créatine que le composant de protéines.

2. Matrice de protéines-créatine selon la revendication 1, **caractérisée en ce que** la matrice de protéines-créatine comprend en outre
iii) au moins un composant de substance minérale choisi dans le groupe des sels alcalins ou alcalino-terreux de l'acide phosphorique, de l'acide diphosphorique, de l'acide triphosphorique, de l'acide citrique, de l'acide lactique, de l'acide gluconique, des sels doubles ou des mélanges de ceux-ci,
dans laquelle le composant de créatine et le composant de substance minérale se présentent sous une forme dispersée dans le composant de protéines.

3. Matrice de protéines-créatine selon la revendication 1 ou 2, **caractérisée en ce que** la matrice de protéines-créatine comprend
| | |
|---|---|
| i) 50 à 95 % en poids | du composant de protéines et |
| ii) 5 à 40 % en poids | du composant de créatine et optionnellement |
| iii) 0 à 10 % en poids | du composant de substance minérale, |
dans laquelle la matrice comprend
iv) au maximum 10 % en poids d'eau.

4. Matrice de protéines-créatine selon au moins l'une des revendications précédentes, **caractérisée en ce que** la matrice de protéines-créatine ou le composant de protéines est dépourvu de lactose.

5. Matrice de protéines-créatine selon au moins l'une des revendications précédentes, **caractérisée en ce que** le composant de protéines est un concentré de protéines de petit-lait, un isolat de protéines de petit-lait ou un hydrolysat de protéines de petit-lait, avec une teneur en protéines d'au moins 75 % en poids de protéines.

6. Matrice de protéines-créatine selon au moins l'une des revendications précédentes, **caractérisée en ce que** la matrice de protéines-créatine ou le composant de protéines comprend au maximum 10 % en poids de graisses et/ou au maximum 10 % en poids d'eau.

7. Matrice de protéines-créatine selon au moins l'une des revendications précédentes, **caractérisée en ce que** le sel alcalin ou alcalino-terreux de l'acide phosphorique, de l'acide diphosphorique, de l'acide triphosphorique, de l'acide citrique, de l'acide lactique, ou de l'acide gluconique est choisi dans le groupe du dihydrogénophosphate de sodium, de l'hydrogénophosphate de disodium, du phosphate de trisodium, de l'hydrogénophosphate de calcium, du phosphate de tricalcium, du dihydrogénophosphate de dicalcium, du tétrahydrogénophosphate de calcium, du dihydrogénocitrate de sodium, de l'hydrogénocitrate de disodium, du citrate de trisodium, du citrate de calcium, du dicitrate de tricalcium, du lactate de sodium, du lactate de calcium, du gluconate de sodium, du gluconate de calcium.

8. Matrice de protéines-créatine selon au moins l'une des revendications précédentes, **caractérisée en ce que** la matrice de protéines-créatine se présente sous la forme d'une poudre avec une taille moyenne de particules de 10 à 100 µm.

9. Matrice de protéines-créatine selon au moins l'une des revendications précédentes, **caractérisée en ce que** la matrice de protéines-créatine ou le composant de protéines ajuste dans l'eau une valeur de pH de 7,0 à 8,0, en particulier une valeur de pH de 7,1 à 7,8.

10. Matrice de protéines-créatine selon au moins l'une des revendications précédentes, **caractérisée en ce que** la matrice de protéines-créatine présente une valeur calorique de 700 à 1700 kJ/100 g.

11. Complément alimentaire pour sportifs comprenant ou contenant au moins une matrice de protéines-créatine selon au moins l'une des revendications précédentes.

12. Procédé de fabrication d'une matrice de protéines-créatine pulvérulente selon au moins l'une des revendications précédentes 1 à 11, comprenant les étapes de procédé suivantes :
a) la préparation d'une solution ou suspension aqueuse pasteurisée Lq1 comprenant au moins un composant de protéines choisi dans le groupe des concentrés de protéines de petit-lait, des isolats de protéines de petit-lait, des hydrolysats de protéines de petit-lait ou des mélanges de ceux-ci, avec une teneur en protéines en matière sèche d'au minimum 55 % en poids ; et
b) la fabrication d'une solution ou suspension Lq2 par ajout simultané ou réalisé consécutivement d'au moins un composant de créatine choisi dans le groupe de la créatine ou d'un sel de celle-ci, du monohydrate de créatine ou des mélanges de ceux-ci, et optionnellement d'au moins un composant de substance minérale choisi dans le groupe des sels alcalins ou alcalino-terreux de l'acide phosphorique, de l'acide diphosphorique, de l'acide triphosphorique, de l'acide citrique, de l'acide lactique, de l'acide gluconique ou des mélanges de ceux-ci, à la solution ou suspension préparée Lq1 ; et
c) le séchage de la solution ou suspension fabriquée Lq2 au moyen de procédés de séchage par pulvérisation, évaporation en couches minces ou séchage sur cylindres.

13. Procédé selon la revendication 12, **caractérisé en ce que** la solution ou la suspension Lq1 est dépourvue de lactose et/ou comprend un concentré de protéines de petit-lait, un isolat de protéines de petit-lait ou un hydrolysat de protéines de petit-lait avec une teneur en protéines d'au moins 55 % en poids (en matière sèche).

14. Procédé selon la revendication 12 ou 13, **caractérisé en ce que** la solution ou la suspension Lq1 contient au moins 30 % en poids de matière sèche.

15. Procédé selon la revendication 12 à 14, **caractérisé en ce que** la solution Lq2 est ajustée au moyen d'une base à une valeur de pH de 7,0 à 8,0, en particulier une valeur de pH de 7,1 à 7,8, après l'addition du composant de créatine et optionnellement du composant de substance minérale.

16. Matrice de protéines-créatine pulvérulente fabriquée industriellement selon au moins l'une des revendications précédentes 1 à 11, préparée d'après un procédé selon au moins l'une des revendications 12 à 15.
